(19) Europäisches Patentamt
European Patent Office
Office européen des brevets

(11) Veröffentlichungsnummer: **0 212 706 B1**

(12) # EUROPÄISCHE PATENTSCHRIFT

(45) Veröffentlichungstag der Patentschrift: **10.03.93**

(51) Int. Cl.[5]: **G02B 6/44**, C08F 299/06, C09D 4/00, C03C 25/02

(21) Anmeldenummer: **86201241.6**

(22) Anmeldetag: **15.07.86**

(54) **Optische Glasfaser mit einer Kunststoffbedeckung und härtbare Kunststoffzusammensetzung.**

(30) Priorität: **23.07.85 NL 8502106**

(43) Veröffentlichungstag der Anmeldung:
**04.03.87 Patentblatt 87/10**

(45) Bekanntmachung des Hinweises auf die Patenterteilung:
**10.03.93 Patentblatt 93/10**

(84) Benannte Vertragsstaaten:
**DE FR GB IT NL SE**

(56) Entgegenhaltungen:
**EP-A- 0 012 948**
**EP-A- 0 140 415**
**EP-A- 0 167 199**
**GB-A- 2 094 329**

**CHEMICAL ABSTRACTS, Band 102, Nr. 20, Mai 1985, Seite 297, Zusammenfassung Nr. 171414s, Columbus, Ohio, US; & JP-A-59 217 654 (NIPPON TELEGRAPH AND TELEPHONE PUBLIC CORP. et al.) 07-12-1984**

(73) Patentinhaber: **N.V. Philips' Gloeilampenfabrieken**
**Groenewoudseweg 1**
**NL-5621 BA Eindhoven(NL)**

(72) Erfinder: **Broer, Dirk Jan**
**INT. OCTROOIBUREAU B.V. Prof. Holstlaan 6**
**NL-5656 AA Eindhoven(NL)**
Erfinder: **Bouten, Petrus Cornelis Paulus**
**INT. OCTROOIBUREAU B.V. Prof. Holstlaan 6**
**NL-5656 AA Eindhoven(NL)**
Erfinder: **Jochem, Cornelis Marinus Gerrit**
**INT. OCTROOIBUREAU B.V. Prof. Holstlaan 6**
**NL-5656 AA Eindhoven(NL)**

(74) Vertreter: **Pennings, Johannes**
**Internationaal Octrooibureau B.V. Prof. Holstlaan 6**
**NL-5656 AA Eindhoven (NL)**

**EP 0 212 706 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine optische Glasfaser mit Kunststoffbedeckung, mit einer Glasfaser, einer ersten Schicht aus einem Kunstkautschuk mit einem Elastizitätsmodul von 1 bis 10 MPa und mit einer zweiten Schichte aus einem Kunststoff mit einem Elastizitätsmodul über 100 MPa, wobei mindestens die erste Kunstkautschukschicht aus einer durch aktinische Strahlung härtbaren Kunststoffzusammensetzung gebildet ist.

Unter einer optischen Glasfaser ist eine Faser aus Glas oder aus Quarzglas zu verstehen, wie diese beispielsweise für Fernmeldezwecke verwendet wird. Unter aktinischer Strahlung ist eine Bestrahlung mit UV-Licht oder mit hochenergetischer Strahlung, wie Bestrahlung mit Elektronen oder Ionen, zu verstehen.

Eine derartige optische Glasfaser und eine derartige härtbare Kunststoffzusammensetzung sind in der europäischen Patentanmeldung EP-A-0167199 beschrieben. Die Kunststoffbedeckung der Glasfaser, die aus einer ersten weichen Schicht und einer zweiten harten Schicht besteht, hat die Aufgabe, eine Glasfaser mit einer grossen Festigkeit und mit einer geringen Mikrobiegeempfindlichkeit zu schaffen. Damit wird erreicht, dass Übertragungsverluste durch mechanische Verformung der Glasfaser in einem möglichst grossen Temperaturbereich gering sind. Zum weiteren Schutz kann die optische Glasfaser noch mit weiteren Schichten aus einem thermoplastischen Kunststoff oder aus Metall umgeben werden, und zwar in Form eines Mantels oder in Form eines Rohres, in dem sich die Faser frei bewegen kann. Die Verwendung einer durch aktinische Strahlung härtbaren Kunststoffzusammensetzung bietet die Möglichkeit, die Glasfaser unmittelbar nach der Bildung, beispielsweise dadurch, dass sie aus einer Vorform gezogen wird, zu umhüllen, wobei eine grosse Zieh- und Bedeckungsgeschwindigkeit der Faser möglich ist.

Um die Gefahr eines Bruchs der Glasfaser bei der Verkabelung und beim Verlegen von Kabeln in einem Fernmeldenetz zu verringern, ist man bestrebt, Glasfasern mit einer grossen Zugfestigkeit unter dynamischen Verhältnissen herzustellen. Um die Betriebssicherheit bei Verwendung der Glasfaser in einem Fernmeldenetz zu erhöhen, ist man bestrebt, Glasfasern herzustellen, deren Eigenschaften in möglichst geringem Ausmass von den wechselnden Umgebungseinflüssen abhängig sind, und die eine nur geringe Alterungsgeschwindigkeit aufweisen. Wenn die Glasfaser ständig mechanisch belastet wird, muss die Gefahr eines statischen Ermüdungsbruchs möglichst gering sein. Es hat sich herausgestellt, dass das Vorhandensein von Wasser alle diese Eigenschaften beeinträchtigt.

Die Erfindung hat nun die Aufgabe, optische Fasen und härtbare Kunststoffzusammensetzungen der eingangs beschriebenen Art derart zu verbessern, dass die Glasfaser mit der Verkleidung eine grössere Zugfestigkeit, eine verringerte Gefahr eines statischen Ermüdungsbruchs und eine geringere Alterungsgeschwindigkeit aufweist, insbesondere auch beim Vorhandensein von Wasser.

Diese Aufgabe wird nach der Erfindung durch eine optische Glasfaser und eine härtbare Kunststoffzusammensetzung der eingangs beschriebenen Art gelöst, die das Kennzeichen aufweist, dass die härtbare Kunststoffzusammensetzung eine Gesamtmenge von 0,1 bis 5 Gew.% einer oder mehrerer Phosphorverbindungen der Strukturformel

$$R_n - \overset{\displaystyle O}{\overset{\|}{P}} - (OH)_{3-n}$$

enthält, in der n gleich 1 oder 2 ist und in der R eine organische Gruppe ist die beim Aushärten der härtbaren Kunststoffzusammensetzung mitreagiert und in das dabei gebildete polymere Netzwerk eingebaut wird. Die organische Gruppe R kann beispielsweise über ein Sauerstoffatom oder über ein Kohlenstoffatom mit dem Phosphoratom verbunden sein, wobei die Strukturformel einen Phosphorsäureester bzw. ein Phosphonat darstellt.

Durch Hinzufügung der Phosphorverbindung nach der Erfindung wird die Haftung der ersten Kunstkautschukschicht an der Glasfaser verbessert. Im Gegensatz zu der Verwendung üblicher Haftmittel, wie beispielsweise Silane, tritt dabei keine Verringerung der Aushärtegeschwindigkeit und des Umwandlungsgrades an der Aussenoberfläche des Kunstkautschuks bei der Aushärtung auf. Ein besonderer Vorteil der Verwendung der Phosphorverbindung nach der Erfindung ist, dass in der Nähe der Grenzfläche der Glasfaser und der ersten Kunstkautschukschicht ein saures Gebiet entsteht, wodurch die Alterung des Glases bzw. Quarzglases der Faser weitgehend vermieden wird. Diese Wirkung führt zu der gewünschten grösseren Festigkeit und der gewünschten längeren Lebensdauer der optischen Glasfaser mit der Kunststoffbedeckung. Dabei ist es nach wie vor möglich, die Kunststoffbedeckung am Ende der Faser auf einfache Weise durch Abisolieren wieder völlig zu entfernen, um Verbindungen herstellen zu können. Das

Abisolieren kann mechanisch sowie mittels eines Lösungsmittels erfolgen.

Die härtbare Kunststoffzusammensetzung kann noch weitere übliche Additive aufweisen, wie reaktive Monomere, lichtempfindliche und lichtabsorbierende Anteile, Katalysatoren, Initiatoren, Gleitmittel, Benetzungsmittel, Antioxidationsmittel und Stabilisatoren.

Zwar werden in der europäischen Patentschrift EP-A-0101091 härtbare Kunststoffzusammensetzungen beschrieben, die Phosphatester aufweisen, aber diese Kunststoffzusammensetzungen werden nicht zum Herstellen einer Kunststoffbedeckung auf einer optischen Glasfaser verwendet. Ausserdem werden die Kunststoffzusammensetzungen nicht durch aktinische Strahlung ausgehärtet, sondern der Phosphaterster erfüllt die Rolle eines Härtungsmittels.

Um zu vermeiden, dass die Phosphorverbindung in die Kunststoffbedeckung migriert, was wegen der gewünschten langen Lebensdauer der optischen Glasfaser nachteilig ist, ist es erforderlich, dass in der obenstehend beschriebenen optischen Glasfaser und in der härtbaren Kunststoffzusammensetzung nach der Erfindung R eine organische Gruppe ist, die beim Aushärten der härtbaren Kunststoffzusammensetzung mitreagiert und in das dabei gebildete polymere Netzwerk eingebaut wird.

Die Phosphorverbindung kann nach der Erfindung zusammen mit in der Technik üblichen härtbaren Kunststoffzusammensetzungen verwendet werden, deren Hauptbestandteil beispielsweise Polysiloxan, Polybutadien, Polyätherurethanakrylat, Polyesterurethanakrylat, Polysiloxanakrylat, ein mit Vinylgruppen und Silylgruppen sich vernetzendes Polymer oder ein Gemisch derartiger Polymere oder ein Copolymer ist.

In einer bevorzugten Ausführungsform der optischen Glasfaser und der härtbaren Kunststoffzusammensetzung nach der Erfindung weist die härtbare Kunststoffzusammensetzung ein Polyurethanakrylat auf und ist R eine organische Gruppe, die mindestens eine Akrylsäureestergruppe aufweist. Geeignete härtbare Kunststoffzusammensetzungen dieser Art sind beispielsweise in der europäischen Patentanmeldung EP-A-0167199 beschrieben. Dabei werden besonders gute Resultate mit einer Phosphorverbindung erzielt, in der R eine 2-Oxyäthyeakrylatgruppe ist.

Um die Beneztung der Glasfaser durch die härtbare Kunststoffzusammensetzung noch zu verbessern und die Aushärtung an der Aussenoberfläche des Kunstkautschuks zu fördern, ist es zweckmässig, dass die härtbare Kunststoffzusammensetzung bis 2 Gew.% eines Poly(dimethylsiloxankoäthylenoxid)akrylats aufweist.

Abhängig von der Zusammensetzung der gewählten härtbaren Kunststoffzusammensetzung können auch andere geeignete mitreagierende Gruppen, wie Methakrylatgruppen und Vinylgruppen, in der Phosphorverbindung verwendet werden.

Die Erfindung wird anhand einiger Ausführungsbeispiele und Vergleichsbeispiele und an Hand einer Zeichnung näher erläutert. Es zeigen

Fig. 1 einen Schnitt durch eine optische Glasfaser nach der Erfindung,

Fig. 2 die Strukturformel von Mono- und Di-2-akryloxyäthylphosphat (mit n = 1 bzw. n = 2) und

Fig. 3 die Strukturformel von Polyätherurethanakrylat.

Beispiel 1

Eine Glasfaser wird auf bekannte Weise dadurch gebildet, dass sie aus einer Vorform gezogen wird. Die Faser weist ein Kernglas und ein Mantelglas mit unterschiedlichen Brechzahlen auf. Stattdessen kann auch eine Faser mit einer von innen nach aussen sich allmählich ändernden Brechzahl verwendet werden und statt einer aus einer Vorform gezogenen Faser kann eine mit dem Doppeltiegelverfahren gebildete Faser verwendet werden. Die in Fig. 1 dargestellte Glasfaser hat einen kreisförmigen Querschnitt (Durchmesser 125 µm), aber der Querschnitt kann auch eine beliebige andere Form haben, beispielsweise elliptisch sein.

Unmittelbar nach der Bildung der Glasfaser wird darauf eine Schicht aus einer härtbaren Kunststoffzusammensetzung angebracht, die danach unter Bildung einer Schicht aus einem Kunstkautschuk 2 mit einer Dicke von 30 µm ausgehärtet wird. Die Schicht wird mittels Bestrahlung von maximal 0,5 s mit einer Hochdruckquecksilberdampfentladungslampe, die UV-Licht mit Wellenlängen von 200 bis 400 nm erzeugt, und zwar mit einer Intensität von 0,6 $W/cm^2$, gemessen an der Kunststoffschicht, zum Aushärten gebracht. Es ist auch möglich, die härtbare Kunststoffzusammensetzung auf andere Weise auszuhärten, beispielsweise durch Bestrahlung mit Elektronen unter Verwendung einer Electrocurtain-Anlage (ein Erzeugnis von Energy Sciences Inc., Woburn, Massachussetts).

Danach wird eine zweite Schicht eines Kunststoffes 3 auf der Faser angebracht, und zwar mit einer Dicke von 30 µm, beispielsweise dadurch, dass die Faser mit einer härtbaren Kunststoffzusammensetzung bedeckt wird, die durch Bestrahlung mit UV-Licht zum Aushärten gebracht wird. Eine geeignete handelsübliche Kunststoffzusammensetzung für die zweite Schicht ist DeSolite 042® von DeSoto Inc., die einen

lichtempfindlichen Initiator aufweist. Nach dem Aushärten weist dieses Material ein Elastizitätsmodul von etwa 400 MPa auf.

Um die optische Faser kann gewünschtenfalls noch ein Mantel aus einem thermoplastischen Kunststoff angebracht werden (in der Figur nicht dargestellt), beispielsweise aus Nylon. Ein derartiger Mantel kann die optische Faser mit Kunststoffbedeckung in direktem Kontakt umhüllen. Der Mantel kann andererseits auch ein Rohr bilden, in dem die optische Faser sich frei bewegen kann, beispielsweise in Silikonöl.

Die erste Kunstkautschukschicht 2 ist aus einer härtbaren Kunststoffzusammensetzung gebildet, die als Hauptbestandteil (76 Gew.%) ein Polyätherurethanakrylat aufweist, wie dies in der europäischen Patentanmeldung EP-A-0167199 beschrieben und in Fig. 3 dargestellt ist. Die härtbare Kunststoffzusammensetzung weist weiterhin die reaktiven Monomere 2-Phenoxy-Äthylakrylat (14 Gew.%) und Hexandioldiakrylat (2 Gew.%) und die lichtempfindlichen Initiatoren 2,2-Dimethoxy-2-phenylacetophenon (2 Gew.%), 2,2-Dimethyl-2-hydroxy-acetophenon (2 Gew.%) und 2-Oxybenzophenon-2-äthoxy-äthylacetophenon (2 Gew.%) auf. Ausserdem enthält die härtbare Kunststoffzusammensetzung 2 Gew.% eines Gemisches aus Mono- und Di-2-Oxyäthylakrylatphosphat (siehe Fig. 2) mit einem Molverhältnis von 1:1.

Die auf diese Weise gebildete Faser wurde einigen Versuchen ausgesetzt. Die dynamische Bruchfestigkeit wird mit einem Biegebruchgerät gemessen. Die Festigkeit wird durch die Bruchwahrscheinlichkeit, wie von P.W. France et.al., J. Mater, Sci.15, 825-830 (1980) beschrieben, dargestellt. Die Tabelle 1 zeigt die Ergebnisse, bei denen die Faser nach der Erfindung mit einer Faser verglichen ist, die auf gleiche Weise hergestellt wurde, bei der aber die Phosphorverbindung fehlt und die übrigen Bestandteile in proportional grösseren Mengen vorhanden sind.

Tabelle 1

| Gefahr eines Bruchs bei Dehnung von: | Nach der Erfindung: | Zum Vergleich: |
|---|---|---|
| 5,8 % | < 0,1 % | 1 % |
| 6,2 % | < 0,1 % | 99 % |
| 6,8 % | 3 % | > 99,9 % |
| 7,2 % | 99 % | > 99,9 % |

Aus der Tabelle 1 geht hervor, dass die erfindungsgemässe Faser fester ist als die damit verglichene Faser.

Die erfindungsgemässe Faser und die damit verglichene Faser werden einem beschleunigten Alterungsverfahren ausgesetzt, indem die Fasern in Wasser von 60°C eingetaucht und nach einem gewählten Zeitverlauf abermals dem dynamischen Bruchfestigkeitsversuch ausgesetzt wurden. Danach wurden die Fasern getrocknet und bei einer relativen Feuchtigkeit von 60% konditioniert, wonach die dynamische Bruchfestigkeit abermals gemessen wurde. Die Ergebnisse sind in der Tabelle 2 angegeben, in der die Dehnung erwähnt ist, bei der die Bruchgefahr 63% beträgt, und zwar abhängig von der Zeit, während der die Fasern sich in Wasser von 60°C befanden.

Tabelle 2

| | Nach der Erfindung: | Zum Vergleich: |
|---|---|---|
| 0 Tage | 7,0 % | 6,1 % |
| 2 Tage, nass | 6,5 % | 5,3 % |
| 2 Tage, trocken | 6,9 % | 5,5 % |
| 7 Tage, nass | 6,5 % | 4,9 % |
| 7 Tage, trocken | 6,9 % | 5,1 % |
| 38 Tage, nass | 6,4 % | 4,8 % |
| 38 Tage, trocken | 6,9 % | 4,9 % |
| 305 Tage, nass | 6,2 % | 4,4 % |
| 305 Tage, trocken | 6,5 % | 4,5 % |

Auch nach dem Altern in Wasser stellt sich heraus, dass die erfindungsgemässe Faser fester ist als die Faser, die ohne die Phosphorverbindung hergestellt wurde. Ausserdem stellt es sich heraus, dass die erfindungsgemässe Faser nach dem Trocknen wieder nahezu die ursprüngliche Festigkeit zurückerhält,

dies im Gegensatz zu der damit verglichenen Faser.

Für einen statischen Ermüdungsversuch wurden die Fasern auf einen Dorn mit einem Durchmesser von 3,4 mm gewickelt und unter mechanischer Spannung (Dehnung = 3,42%) in Wasser gelagert. Bei der verglichenen Faser tritt der erste Bruch nach 10 bis 18 Minuten auf und sind nach 85 bis 93 Minuten 63% der Faserwindungen gebrochen. Bei der erfindungsgemässen Faser tritt der erste Bruch erst nach mehr als 1000 Minuten auf.

Bei ergänzenden Versuchen hat sich herausgestellt, dass das Hinzufügen der Phosphorverbindung bei einer Menge von mindestens 0,1 Gew.% effektiv ist. Bei einer Menge über 5 Gew.% werden die Eigenschaften des Kunstkautschuks beeinträchtigt.

Die Benetzung der Glasfaser und die Härtung an der Oberfläche können durch Hinzufügen von Poly-(dimethylsiloxan-co-äthylenoxid)akrylat, beispielsweise in einer Menge von 1 Gew.%, weiter verbessert werden. Bei Kunststoffzusammensetzungen nach der Erfindung wird die Oberflächenhärtung dadurch um etwa einen Faktor 10 beschleunigt.

Ausführungsbeispiele 2-5 und Vergleichsbeispiele VI-XV

Die in diesen Beispielen verwendeten härtbaren Kunststoffzusammensetzungen enthalten als Hauptbestandteil Polypropylenoxydurethanakrylate mit einem unterschiedlichen Molekulargewicht (in der Tabelle 3 ist das nach der Zahlgemittelte Molekulargewicht angegeben). Andere geeignete Polymere sind beispielsweise DeSolite 039® und Desolite 073® von DeSoto Inc.

Reaktive Monomere werden verwendet, um die Viskosität und die Aushärtegeschwindigkeit zu beeinflussen. Die härtbaren Kunststoffzusammensetzungen werden entsprechend diesen Beispielen bei einer Temperatur von 45°C auf der Glasfaser angebracht, wobei die Viskosität etwa 2 Pa.s beträgt. Die verwendeten reaktiven Monomere sind 2-Phenoxyäthylakrylat (PEA), 1,6-Hexandioldiakrylat (HDDA), 2,(2-Äthoxyäthoxy)-äthylakrylat (EEEA) und Tripropylenglykoldiakrylat (TPGDA). Auch Trimethylolpropantriakrylat ist in härtbaren Kunststoffzusammensetzungen nach der Erfindung verwendbar.

Als lichtempfindlicher Initiator wird in diesen Beispielen 2,2-Dimethoxy-2-phenylazetophenon verwendet.

Die verwendete Phosphorverbindung ist das 1:1-Gemisch von Mono- und Di-2-Akryloxyäthylphosphat. Ein alternatives Haftmittel ist $\gamma$-Methakryloxypropyltrimethoxysilan.

Härtbare Kunststoffzusammensetzungen nach der Tabelle 3 wurden auf die in dem Beispiel 1 angegebene Art und Weise zum Herstellen optischer Fasern verwendet. In der Tabelle 3 sind die Beispiele 2 bis 5 nach der Erfindung und die Beispiele VI bis XV zum Vergleich.

**Tabelle 3**

| | Nach der Erfindung | | | | Zum Vergleich | | | | | | | | | |
|---|---|---|---|---|---|---|---|---|---|---|---|---|---|---|
| | 2 | 3 | 4 | 5 | VI | VII | VIII | IX | X | XI | XII | XIII | XIV | XV |
| Zusammensetzung in Gew.%: | | | | | | | | | | | | | | |
| Polypropylenoxidurethanakrylat: | | | | | | | | | | | | | | |
| MW = 4650 | 81 | 76 | 0 | 0 | 81 | 96 | 77 | 77 | 77 | 77 | 0 | 0 | 0 | 0 |
| MW = 9500 | 0 | 0 | 69 | 0 | 0 | 0 | 0 | 0 | 0 | 0 | 96 | 77 | 77 | 0 |
| MW = 3400 | 0 | 0 | 0 | 72 | 0 | 0 | 0 | 0 | 0 | 0 | 0 | 0 | 0 | 96 |
| PEA | 13 | 10 | 14 | 0 | 13 | 0 | 19 | 15 | 0 | 0 | 0 | 0 | 0 | 0 |
| HDDA | 0 | 0 | 0 | 0 | 0 | 0 | 0 | 2 | 0 | 0 | 0 | 0 | 0 | 0 |
| EEEA | 0 | 0 | 0 | 12 | 0 | 0 | 0 | 0 | 19 | 0 | 0 | 0 | 19 | 0 |
| TPGDA | 0 | 10 | 14 | 12 | 0 | 0 | 0 | 0 | 0 | 19 | 0 | 0 | 0 | 0 |
| Initiator | 4 | 2 | 2 | 2 | 4 | 4 | 4 | 6 | 4 | 4 | 4 | 4 | 4 | 4 |
| Phosphorverbindung | 2 | 2 | 1 | 2 | 0 | 0 | 0 | 0 | 0 | 0 | 0 | 0 | 0 | 0 |
| γ-Methakryloxypropyltrimethoxysilan | 0 | 0 | 0 | 0 | 2 | 0 | 0 | 0 | 0 | 0 | 0 | 0 | 0 | 0 |
| Elastizitätsmodul (MPa) | - | 1,9 | 2,3 | 4,7 | - | 2,5 | 3,4 | - | 2,5 | 1,6 | 1,4 | 1,5 | 1,3 | 3,2 |
| Tg(°C) | - | -52 | -58 | -61 | - | -49 | -53 | - | -53 | -49 | -49 | -56 | -59 | -55 |
| Dehnung bei Bruch | - | - | 7,0 | 7,0 | - | - | - | 6,5 | - | - | - | - | - | - |

In der Tabelle 3 sind der Elastizitätsmodul bei 25°C in MPa, die Glasübergangstemperatur $T_g$ in °C und die Dehnung bei Bruch in % (Biegebruchversuch, siehe Beispiel 1) des Kunstkautschuks dargestellt, der beim Aushärten der härtbaren Kunststoffzusammensetzung gebildet ist.

Aus einem Vergleich der Beispiele 2 und VI ergibt sich, dass bei Verwendung des Silans als Haftmittel die Haftung der ersten Kunststoffbedeckung an der (Quarz)Glasfaser verbessert wird, ebenso wie bei Verwendung der Phosphorverbindung nach der Erfindung. Das Silan beeinträchtigt jedoch die Aushärtung insbesondere an der Aussenoberfläche des Kunstkautschuks. Auch hat eine Hinzufügung des Silans nicht

die gewünschte Wirkung auf die Lebensdauer der optischen Fasern.

Die Fasern, die mit Hilfe der Kunststoffzusammensetzungen nach den Beispielen 3 bis 5 hergestellt wurden, zeigten eine grössere Festigkeit und eine bessere Alterungsbeständigkeit als die Fasern nach den Vergleichsbeispielen VI bis XV.

**Patentansprüche**

1. Optische Glasfaser mit Kunststoffbedeckung, mit einer Glasfaser, einer ersten Schicht aus einem Kunstkautschuk mit einem Elastizitätsmodul von 1 bis 10 MPa und mit einer zweiten Schicht aus einem Kunststoff mit einem Elastizitätsmodul über 100 MPa, wobei mindestens die erste Kunstkautschukschicht aus einer durch aktinische Strahlung härtbaren Kunststoffzusammensetzug gebildet ist, dadurch gekennzeichnet, dass die härtbare Kunststoffzusammensetzung eine Gesamtmenge von 0,1 bis 5 Gew.% einer oder mehrerer Phosphorverbindungen der Strukturformel

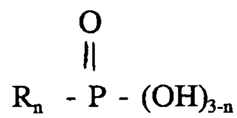

enthält, in der n gleich 1 oder 2 ist und R eine organische Gruppe ist, die beim Aushärten der härtbaren Kunststoffzusammensetzung mitreagiert und in das dabei gebildete polymere Netzwerk eingebaut wird.

2. Optische Glasfaser nach Anspruch 1, dadurch gekennzeichnet, dass die härtbare Kunststoffzusammensetzung ein Polyurethanakrylat aufweist, und dass R eine organische Gruppe ist, die mindestens eine Akrylsäureestergruppe aufweist.

3. Optische Glasfaser nach Anspruch 2, dadurch gekennzeichnet, dass R eine 2-Oxyäthylakrylatgruppe ist.

4. Optische Glasfaser nach einem der Ansprüche 1 bis 3, dadurch gekennzeichnet, dass die härtbare Kunststoffzusammensetzung bis 2 Gew. % eines Poly(dimethylsiloxan-co-äthylenoxid)akrylats aufweist.

**Claims**

1. An optical glass fibre having a synthetic resin coating, comprising a glass fibre, a first layer of a synthetic rubber having a modulus of elasticity of from 1 to 10 MPa, and a second layer of a synthetic resin having a modulus of elasticity exceeding 100 MPa, at least the first layer of synthetic rubber being formed from a synthetic resin composition which can be cured by actinic radiation, characterized in that the curable synthetic resin composition comprises a total quantity of 0.1 to 5% by weight of one or more than one phosphorus compounds of the following structural formula:

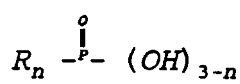

wherein n has a value of 1 or 2 wherein R is an organic group which co-reacts during the curing of the curable synthetic resin composition and is built into the polymeric network thus formed.

2. An optical glass fibre as claimed in Claim 1, characterized in that the curable synthetic resin composition comprises a polyurethane acrylate and that R is an organic group which comprises at least one acrylic-acid ester group.

3. An optical glass fibre as claimed in Claim 2, characterized in that R is a 2-oxyethyl acrylate group.

**4.** An optical glass fibre as claimed in any one of the Claims 1 up to and including 3, characterized in that the curable synthetic resin composition comprises up to 2% by weight of a poly(dimethyl siloxane-co-ethyleneoxide) acrylate.

## Revendications

**1.** Fibre optique revêtue de matière plastique, comportant une fibre de verre, une première couche d'un caoutchouc artificiel dont le module d'élasticité est compris entre 1 et 10 MPa, ainsi qu'une deuxième couche d'un caoutchouc artificiel dont le module d'élasticité est supérieur à 100 MPa, au moins la première couche de caoutchouc artificiel étant réalisée à partir d'une composition de résine synthétique durcissable par rayonnement actinique, caractérisée en ce que la composition synthétique durcissable comporte une quantité totale comprise entre 0,1 et 5% en poids d'un ou de plusieurs composés de phosphore ayant la formule de constitution

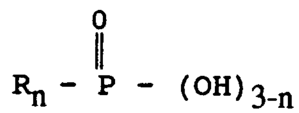

dans laquelle n est égale à 1 ou à 2 et dans laquelle R est constitué d'un groupe organique qui participe également à la réaction lors du durcissement de la composition synthétique durcissable et qui est incorporé dans le réseau polymère ainsi formé.

**2.** Fibre de verre optique selon la revendication 1, caractérisée en ce que la composition synthétique durcissable présente un acrylate de polyuréthane et en ce que R est constitué d'un groupe organique comportant au moins un groupe d'ester acrylique.

**3.** Fibre de verre optique selon la revendication 2, caractérisée en ce que R est constitué d'un groupe de 2-oxyéthylacrylate.

**4.** Fibre de verre optique selon l'une quelconque des revendications 1 à 3, caractérisée en ce que la composition synthétique durcissable présente jusqu'à 2 % en poids d'un poly(diméthylsiloxane-co-éthylèneoxyde)acrylate.

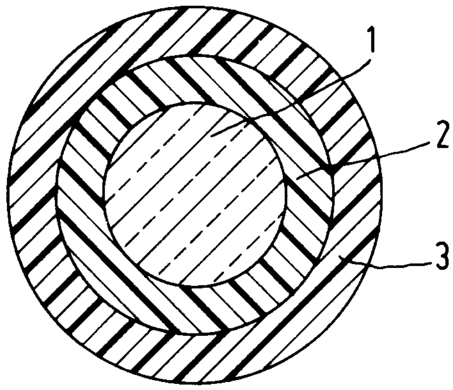


FIG.1

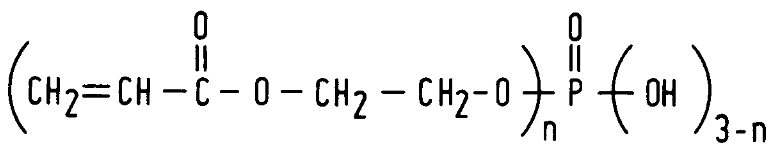

FIG.2

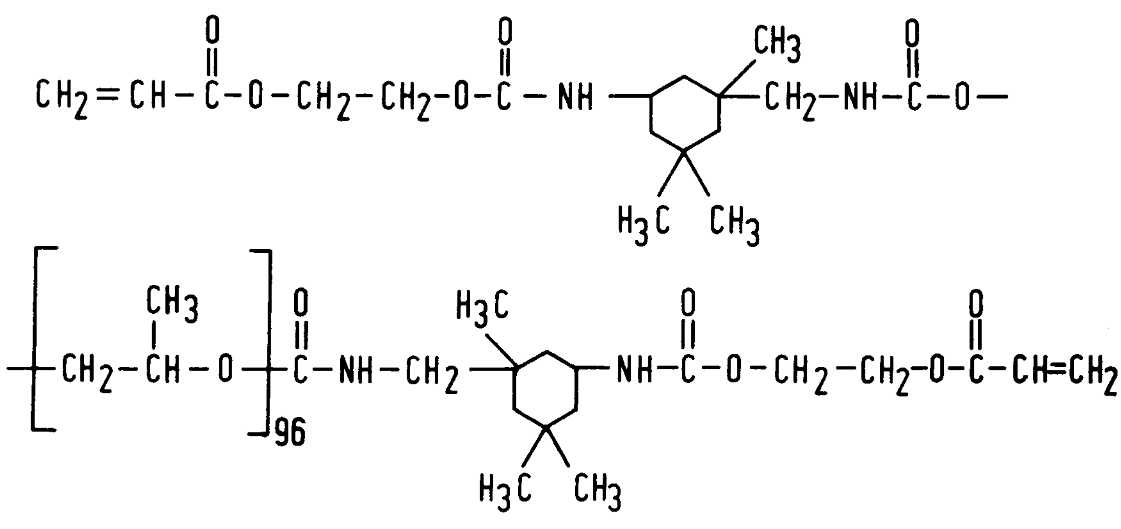

FIG.3